# EUROPÄISCHE PATENTSCHRIFT

(11) **EP 3 251 761 B1**
(45) Veröffentlichungstag und Bekanntmachung des Hinweises auf die Patenterteilung: **31.10.2018**
(21) Anmeldenummer: 17168561.3
(22) Anmeldetag: 27.04.2017
(51) Int. Cl.: B08B 9/051, B23C 3/12

(54) **FRÄSROBOTER FÜR DIE KANALROHRSANIERUNG MIT EINEM AUFSTECKFRÄSKOPF**
MILLING ROBOT FOR THE RENOVATION OF PIPELINES WITH A MILLING HEAD
ROBOT FRAISEUR POUR L'ASSAINISSEMENT DE CONDUITE COMPRENANT UNE TÊTE DE FRAISAGE RELEVABLE

(30) Priorität: 27.05.2016 DE 102016109845
(43) Veröffentlichungstag der Anmeldung: 06.12.2017
(73) Patentinhaber: IBAK Helmut Hunger GmbH & Co. KG, 24148 Kiel (DE)
(72) Erfinder: Stock, Markus, 24106 Kiel (DE)
(74) Vertreter: Lobemeier, Martin Landolf

(56) Entgegenhaltungen:
- EP-A2- 2 769 790
- DE-T2- 69 718 021
- DE-U1- 9 209 821

## Beschreibung

Die Erfindung betrifft einen Fräsroboter für die Kanalrohrsanierung mit einem Motor, der ein Motorgehäuse und eine sich über das Motorgehäuse hinaus erstreckende Abtriebswelle aufweist, und einem mit der Abtriebswelle verbundenen Aufsteckfräskopf mit einem Fräskörper, der eine auf seiner Außenseite angeordnete spanabhebende Oberfläche aufweist, und einem Verbindungsmittel zur drehfesten Verbindung der Abtriebswelle mit dem Fräskörper.

Ein derartiger Fräsroboter mit den den Oberbegriff von Anspruch 1 verwirklichenden Merkmalen ist beispielsweise aus der EP 2 769 790 A2 bekannt. Ähnliche Fräsroboter offenbaren die DE 92 09 821 U1 und die DE 697 18 021 T2.

Bei der Sanierung von Kanalrohren kommen häufig Fräsroboter zum Einsatz, die beispielsweise auf Fahrwagen angeordnet oder mit einem Schiebstab versehen sind und so einen automatisierten oder manuellen Vortrieb im Kanalrohr ermöglichen.

Für den Antrieb des Fräskopfs werden Pneumatik-, Hydraulik- oder Elektromotoren verwendet, wobei die Verwendung von Elektromotoren gegenüber Pneumatik- und Hydraulikmotoren bevorzugt ist, da letztere für deren Betrieb große, z. T. recht laute und in jedem Fall energieintensive Antriebsaggregate benötigen.

Die Verwendung von Elektromotoren hingegen hat den Nachteil, dass die Abtriebswelle eines Elektromotors im Elektromotor selbst üblicherweise nicht ausreichend für die Verwendung mit einem Fräswerkzeug gelagert ist, sodass die beim Fräsvorgang auftretenden Axial- und Radialkräfte den Elektromotor beschädigen können. Zur Vermeidung einer derartigen Beschädigung des Elektromotors wird daher an die Abtriebswelle des Elektromotors eine zweite Welle angekoppelt, die in einem weiteren Lager gelagert ist, das die beim Fräsvorgang auftretenden Axial- und Radialkräfte ableiten kann, ohne dass der Elektromotor beschädigt wird.

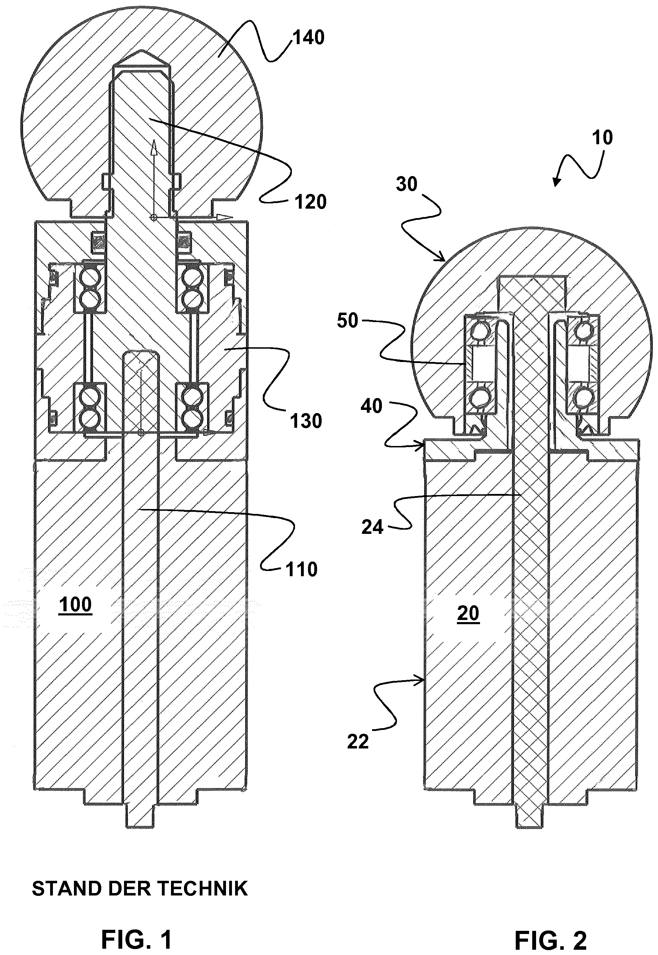

Fig. 1 zeigt einen aus offenkundiger Vorbenutzung bekannten Aufbau nach dem Stand der Technik in einer Detailansicht.

Insbesondere zeigt Fig. 1 einen Elektromotor 100 mit einer Abtriebswelle 110. Der Abtriebswelle 110 des Elektromotors 100 ist in axialer Richtung eine weitere Welle 120 vorgesetzt, die mit der Abtriebswelle 110 drehfest verbunden und in einem Radiallager 130 gelagert ist. Die weitere Welle 120 erstreckt sich über dessen Radiallager 130 hinaus und ist drehfest mit einem Aufsteckfräskopf 140 verbunden.

Nachteil dieser Ausgestaltung ist, dass nicht nur ein das Fräswerkzeug verlängerndes Element, nämlich das Radiallager 130, verwendet, sondern auch das die Welle 120 lagernde Radiallager 130 zur Aufnahme der Axial- und Radialmomente recht groß dimensioniert werden muss und dadurch die Bogengängigkeit der Fräsroboter stark eingeschränkt ist.

Aufgabe der Erfindung ist es daher, einen Fräsroboter mit geringen, die Bogengängigkeit nicht beeinflussenden Abmessungen zu schaffen.

Diese Aufgabe wird erfindungsgemäß durch den Fräsroboter mit den Merkmalen von Anspruch 1 gelöst. Die Unteransprüche geben vorteilhafte Ausgestaltungen der Erfindung wieder.

Grundgedanke der Erfindung ist es, das Lager im Aufsteckfräskopf selbst aufzunehmen, sodass lediglich das Drehmoment von der Abtriebswelle auf das Fräswerkzeug, nicht aber auf das Fräswerkzeug wirkende Axial- und Radialkräfte auf die Abtriebswelle übertragen werden.

Ein erfindungsgemäß ausgestalteter Fräsroboter für die Kanalrohrsanierung weist also einen Motor, der ein Motorgehäuse und eine sich über das Motorgehäuse hinaus erstreckende Abtriebswelle auf, und einen mit der Abtriebswelle verbundenen Aufsteckfräskopf, wobei eine die Abtriebswelle aufnehmende Hülse mit einem sich am Motorgehäuse abstützenden Flansch vorgesehen ist und wobei der Aufsteckfräskopf wenigstens ein Lager zur drehbaren Lagerung des Aufsteckfräskopfs auf der Hülse, einen mit dem Lager verbundenen Fräskörper mit einer auf seiner Außenseite angeordneten spanabhebenden Oberfläche, und ein Verbindungsmittel zur drehfesten Verbindung der Abtriebswelle mit dem Fräskörper aufweist.

Die Abtriebswelle ist dabei durch die Hülse durchgeführt, ohne mit dieser in Kontakt zu kommen.

Insbesondere ist das Lager dafür ausgelegt, die beim Fräsen auftretenden Axial- und Radialkräfte aufzunehmen und über die Hülse und den Hülsenflansch auf das Motorgehäuse zu übertragen und so die Motorwelle von diesen Kräften zu entkoppeln. Alternativ können auch zwei Lager vorgesehen sein, wobei das eine Lager zur drehbaren Lagerung des Fräskopfs auf der Hülse und zur Aufnahme von Radialkräften und das andere Lager zur Lagerung des Fräskopfs auf dem Hülsenflansch zur Aufnahme von Axialkräften eingerichtet ist.

Nach einer bevorzugten Ausgestaltung ist das Lager ein die Hülse umgebendes Wälzlager mit einem Innenring und einem Außenring, wobei sich der Innenring radial und axial an der Hülse abstützt.

Alternativ kann zusätzlich zu einem Axiallager ein Radiallager, vorzugsweise ein Nadellager, vorgesehen sein, das die Hülse als Lauffläche nutzt.

Besonders bevorzugt sind das Lager und der Fräskörper als Baugruppe ausgebildet, sodass ein einfacher Wechsel eines verschlissenen Aufsteckfräskopfs vorgenommen werden kann.

Die Erfindung ist insbesondere für einen Fräsroboter geeignet, bei dem der Motor ein Elektromotor ist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 2: eine schematische Detailansicht eines besonders bevorzugt ausgestalteten Fräsroboters; und
- Fig. 3: einen schematischen Querschnitt durch einen bevorzugt ausgestalteten Aufsteckfräskopf.

Fig. 2 zeigt eine schematische Detailansicht eines besonders bevorzugt ausgestalteten Fräsroboters.

Der Fräsroboter 10 weist einen Motor 20 auf mit einem Motorgehäuse 22 und einer sich über das Motorgehäuse 22 hinaus erstreckenden Abtriebswelle 24. Die Abtriebswelle 24 ist - ohne die Notwendigkeit einer weiteren Welle - direkt mit einem erfindungsgemäß ausgebildeten Aufsteckfräskopf 30 verbunden.

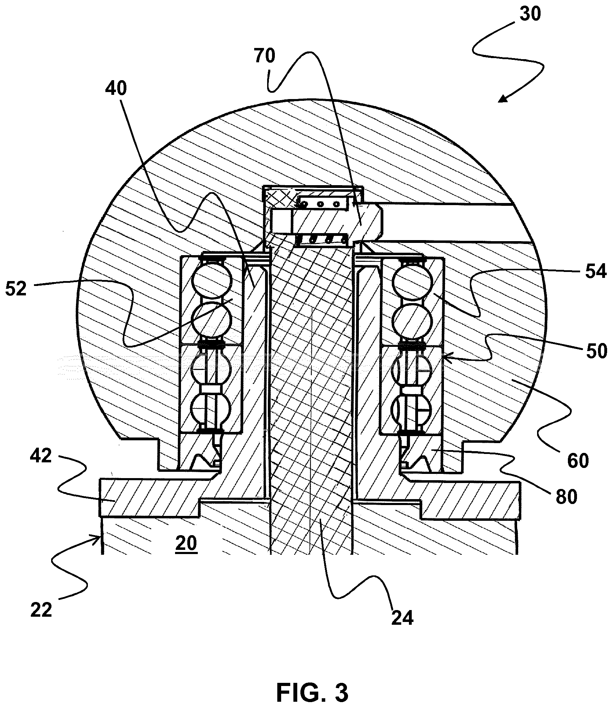

Aufgrund des besonderen in Fig. 3 im Detail dargestellten Aufbaus des Aufsteckfräskopfs 30 ist ein besonders kompakter, insbesondere kurzer Werkzeugaufbau möglich. Die Gegenüberstellung der in Fig. 1 nach dem Stand der Technik und in Fig. 2 erfindungsgemäß ausgestalteten Gegenstände auf einer Seite machen den Längenunterschied deutlich.

Zu besseren Erläuterung des Aufbaus des Aufsteckfräskopfs 30 ist dieser in Fig. 3 vergrößert dargestellt. Der Aufsteckfräskopf 30 weist eine die Abtriebswelle 24 des Elektromotors 20 aufnehmende Hülse 40 mit einem sich am Motorgehäuse 22 abstützenden Flansch 42, ein als Radiallager ausgebildetes Lager 50 mit einem mit der Hülse 40 verbundenen Innenring 52 und einem relativ zum Innenring 52 drehbaren Außenring 54, einen mit dem Außenring 54 des Lagers 50 verbundenen Fräskörper 60 mit einer auf seiner Außenseite angeordneten spanabhebenden Oberfläche, und ein Verbindungsmittel 70 zur drehfesten Verbindung der Abtriebswelle 24 mit dem Fräskörper 60 auf.

Das Lager 50 ist also zur Lagerung des Fräsköpers 60 eingerichtet, sodass auf den Fräskörper 60 wirkende Kräfte nicht auf die Abtriebswelle 24 des Elektromotors 20 übertragen werden. Die Lagerung der Abtriebswelle 24 des Elektromotors 20 selbst kann daher ausschließlich im Elektromotor 20 selbst erfolgen.

Schließlich ist noch in Fig. 3 eine am Fräskopf 30 angeordnete mitdrehende Dichtung 80 zur Abdichtung der Lager 50 des Fräskopfs 30 zu erkennen. Hierfür weist die Dichtung 80 eine sich an die Hülse 40 anlehnende Dichtlippe auf, wobei die Dichtlippe derart ausgestaltet ist, dass diese sich bei höheren Drehzahlen von der Hülse 40 abhebt. Dadurch wird eine Überhitzung der Dichtung 80 vermieden. Gleichzeitig erzeugen die bei Rotation des Fräskopfs 30 wirkenden Fliehkräfte eine funktionelle Abdichtung des Lagers 50 und ersetzen damit die durch die Rotation aufgehobene Dichtwirkung der Dichtlippe. Die Bereitstellung der Dichtung 80 ist unabhängig von der konkreten Ausgestaltung des Fräskopfs und kann allgemein zur Abdichtung der Lager eines erfindungsgemäß ausgestalteten Fräskopfs verwendet werden.

## Patentansprüche

1. Fräsroboter (10) für die Kanalrohrsanierung mit
- einem Motor (20), der ein Motorgehäuse (22) und eine sich über das Motorgehäuse (22) hinaus erstreckende Abtriebswelle (24) aufweist,
- einem mit der Abtriebswelle (24) verbundenen Aufsteckfräskopf (30) mit einem Fräskörper (60), der eine auf seiner Außenseite angeordnete spanabhebende Oberfläche aufweist, und
- einem Verbindungsmittel (70) zur drehfesten Verbindung der Abtriebswelle (24) mit dem Fräskörper (60),
**gekennzeichnet durch**
eine die Abtriebswelle (24) aufnehmende Hülse (40) mit einem sich am Motorgehäuse (22) abstützenden Flansch (42),
wobei der Aufsteckfräskopf (30) wenigstens ein mit dem Fräskörper (60) verbundenes Lager (50) zur drehbaren Lagerung des Aufsteckfräskopfs (30) auf der Hülse (40), aufweist.

2. Fräsroboter (10) nach Anspruch 1, **dadurch gekennzeichnet, dass** das Lager (50) ein die Hülse (40) umgebendes Wälzlager mit einem Innenring (52) und einem Außenring (54) ist, wobei sich der Innenring (52) radial und axial an der Hülse (40) abstützt.

3. Fräsroboter (10) nach einem der vorhergehenden Ansprüche, **dadurch gekennzeichnet, dass** das Lager (50) und der Fräskörper (60) als Baugruppe ausgebildet sind.

4. Fräsroboter (10) nach einem der vorhergehenden Ansprüche, **dadurch gekennzeichnet, dass** der Motor (20) ein Elektromotor ist.

## Claims

1. Milling robot (10) for sewage pipe rehabilitation with
- a motor (20) which includes a motor housing (22) and a pinion shaft (24) extending beyond the motor housing (20),
- an add-on milling head (30) linked to the pinion shaft (24) with a milling body (60) which has a cutting surface attached to its outside, and
- a joining means (70) attaching the torque-proof connection of the pinion shaft (24) to the milling body (60),
**characterised by**
a sleeve (40) accepting the pinion shaft (24) with a flange (42) supported by the motor housing (22),
whereby the add-on milling head (30) has at least one bearing (50) attached to the milling body (60) to ensure rotatable mounting of the add-on milling head (30) on the sleeve (40).

2. Milling robot (10) according to claim 1 **characterised in that** the bearing (50) is a roller bearing surrounding the sleeve (40) with an inner ring (52) and an outer ring (54) whereby the inner ring (52) radially and axially is supported by the sleeve (40).

3. Milling robot (10) according to one of the preceding claims **characterised in that** the bearing (50) and the milling body (60) are designed as an assembly.

4. Milling robot (10) according to one of the preceding claims **characterised in that** the motor (20) is an electromotor.

## Revendications

1. Robot de fraisage (10) pour l'assainissement du conduit du canal, équipé
- d'un moteur (20), comportant un carter de moteur (22) et un arbre de sortie (24) s'étendant au-delà du carter de moteur (22),
- d'une tête de fraisage emboîtable (30) reliée à l'arbre de sortie (24) et dotée d'un corps de fraisage (60) présentant une surface d'usinage installée sur sa partie extérieure,
- un élément de raccord (70) permettant un raccord résistant à la torsion de l'arbre de sortie (24) avec le corps de fraisage (60),
**caractérisée par**
une douille (40) accueillant l'arbre de sortie (24) avec une bride (42) s'appuyant sur le carter du moteur (22),
à savoir que la tête de fraisage emboîtable (30) est dotée d'au moins un palier (50) relier au corps de fraisage (60) afin d'assurer un logement rotatif de la tête de fraisage emboîtable (30) sur la douille (40).

2. Robot de fraisage (10) selon la revendication 1, **caractérisé en ce que** le palier (50) est un palier à roulement entourant la douille (40) et doté d'un anneau intérieur (52) et d'un anneau extérieur 25 (54), à savoir que l'anneau intérieur (52) s'appuie radialement et dans le sens axial sur la douille (40).

3. Robot de fraisage (10) selon une des revendications précédentes, **caractérisée en ce que** le palier (50) et le corps de fraisage (60) sont constitués comme un module.

4. Robot de fraisage (10) selon une des revendications précédentes, **caractérisée en ce que** le moteur (20) est un moteur électrique.
